(19) Europäisches Patentamt
European Patent Office
Office européen des brevets

(11) **EP 4 036 763 A1**

(12) **EUROPEAN PATENT APPLICATION**

(43) Date of publication:
**03.08.2022 Bulletin 2022/31**

(51) International Patent Classification (IPC):
**G06F 17/11** (2006.01)      **G06N 10/00** (2022.01)

(21) Application number: **21216384.4**

(52) Cooperative Patent Classification (CPC):
**G06F 17/11; G06N 10/00**

(22) Date of filing: **21.12.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 US 202117248629**

(71) Applicant: **FUJITSU LIMITED**
**Kawasaki-shi, Kanagawa 211-8588 (JP)**

(72) Inventors:
• **Mandal, Avradip**
  **Sunnyvale, CA, 94085 (US)**
• **Roy, Arnab**
  **Sunnyvale, CA, 94085 (US)**
• **Upadhyay, Sarvagya**
  **Sunnyvale, CA, 94085 (US)**
• **Ushijima-Mwesigwa,, Hayato**
  **Sunnyvale, CA, 94085 (US)**

(74) Representative: **Hoffmann Eitle**
**Patent- und Rechtsanwälte PartmbB**
**Arabellastraße 30**
**81925 München (DE)**

(54) **SOLVING INTEGER LINEAR PROGRAMMING PROBLEMS ON OPTIMIZATION SOLVER MACHINES**

(57) According to an aspect of an embodiment, operations include receiving an Integer Linear Programming (ILP) problem including an objective function and a set of constraints on integer variables of the objective function. The operations may further include determining a lower bound vector for the integer variables and determining an upper bound vector for the integer variables. The operations further include obtaining a binary variable representation of each of the integer variables and updating the received ILP problem based on the obtained binary variable representation. The operations further include generating a Quadratic Unconstrained Binary Optimization (QUBO) formulation of the updated ILP problem and submitting the generated QUBO formulation to a first optimization solver machine. The operations further include receiving a solution of the submitted QUBO formulation and determining an integral solution of the received ILP problem.

FIG. 1

**Description**

CROSS-REFERENCE TO RELATED APPLICATIONS/INCORPORATION BY REFRENCE

This Application makes reference to United States Application Ser. No. 17/248,198, filed on Jan. 13, 2021, titled "AN EXACT METHOD FOR SOLVING MULTIDIMENSIONAL KNAPSACK USING LATTICE REDUCTION AND ILP SOLVERS." The above stated Patent Application is hereby incorporated herein by reference in its entirety.

FIELD

The embodiments discussed in the present disclosure are related to solving integer linear programming problems on optimization solver machines.

BACKGROUND

Many of the real-world problems can be treated as an integer programming (IP) problem. Many real-world problems in various industries involve decisions as discrete choices which fall into the scope of an IP problem. For example, a real-world problem of a project revenue maximation may be considered as an IP problem, in which it may be required to maximize the revenue generated by projects in an organization, subjected to budget constraints every year. Any particular IP problem will usually have a specific set of optimal solutions which may have to be searched from a discrete solution space of integer numbers.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of the disclosure, operations may include receiving an Integer Linear Programming (ILP) problem including an objective function and a set of constraints on integer variables of the objective function. The operations may further include determining a lower bound vector for the integer variables by solving a first linear program on a relaxed form of the integer variables and determining an upper bound vector for the integer variables by solving a second linear program on the relaxed form of the integer variables. The operations may further include obtaining a binary variable representation of each of the integer variables based on the determined lower bound vector and the determined upper bound vector. The operations may further include updating the received ILP problem based on the obtained binary variable representation. The operations may further include generating a Quadratic Unconstrained Binary Optimization (QUBO) formulation of the updated ILP problem and submitting the generated QUBO formulation to a first optimization solver machine. The operations may further include receiving a solution of the submitted QUBO formulation from the first optimization solver machine and determining an integral solution of the received ILP problem based on the received solution.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an exemplary network environment for solving integer linear programming problems on optimization solver machines,

FIG. 2 is a block diagram of a system for solving integer linear programming problems on optimization solver machines,

FIGs. 3A and 3B, collectively, depicts a block diagram that illustrates a set of operations for solving integer linear programming problems on optimization solver machines,

FIG. 4 is a flowchart of an example method for solving a modified multi-dimensional knapsack problem on optimization solver machines,

all according to at least one embodiment described in the present disclosure.

DESCRIPTION OF EMBODIMENTS

Embodiments of the present disclosure are explained with reference to the accompanying drawings.

Some embodiments described in the present disclosure relate to methods and systems for solving integer linear programming (ILP) problems on optimization solver machines. Many of the real-world problems can be treated as an ILP problem. Many real-world problems in various industries involve decisions as discrete choices which may fall into the scope of an ILP problem. Many real-world problems in various industries (such as airline industry, manufacturing process optimization, supply chain, routing, and finance) involve decisions as discrete choices which may fall into the scope of an ILP problem. For example, a real world problem of cutting stock may be considered as an ILP problem, in which it may be required to cut standard-sized pieces (or patterns) of stock material, such as paper rolls or sheet metal, into pieces of specified sizes while minimizing material wasted and the cost associated with using the patterns. Any particular ILP problem will usually have a specific set of optimal solutions which may have to be searched from a discrete solution space of integer numbers.

Any ILP problem may be solved to find an integral solution, which may include integral values of a vector of integer variables. Each integer variable of the vector may range over entire set of integers. While ILP problem has enumerable applications; finding an optimal solution is very hard. In some instances, the ILP problem may not even have a bounded solution, i.e. where the optimum may approach infinity.

In order to find an optimal or near optimal solution of the ILP problem in a tractable amount of time, optimization solver machines, such as Ising Processing Units (IPUs) may be utilized. To solve the IP problem on the optimization solver machines, the IP problem may be required to be formulated as Quadratic Unconstrained Binary Optimization (QUBO) formulation or an Ising formulation. To obtain the QUBO formulation or the Ising formulation, the vector of integer variables may have to be represented as a vector with binary variables.

In order to convert unknown integer vector (x) into a vector of binary variables, an upper bound and a lower bound around each integer variable of the unknown integer vector (x) may have to be determined. For each integer variable, the integral solution of the ILP problem may lie between the lower bound and the upper bound. If the difference between the lower and upper bounds for an integer variable is larger, encoding of such an integer variable in terms of binary variables may require a greater number of binary variables. Efficient conversion to QUBO may require use of fewer binary variables for each integer variable. As the number of binary variables increase, the time complexity of solving QUBO may also increase.

According to one or more embodiments of the present disclosure, the technological field of discrete optimization may be improved by configuring a system in a manner in which the system is able to determine better lower and upper bounds than the traditional methods of determining lower and upper bounds. The disclosed system may narrow down the range of the lower bound and the upper bound so that each integer variable may be represented with fewer number of binary variables. By having fewer number of binary variables, utilization of optimization solver machines may improve, which may lead to a reduced time complexity in finding a solution of the QUBO.

The disclosed system may be capable of efficiently representing of one or more slack variables in terms of binary variables, which may be used to obtain the QUBO formulation. The disclosed system may submit the QUBO formulation to an optimization solver machine, which may determine a solution for the submitted QUBO in terms of a vector of binary values. The integral solution of the ILP problem may be determined based on the solution of the submitted QUBO. In some embodiments, the disclosed system may be capable of determining the integral solution of a multi-dimensional knapsack problem and its variants thereof, including a modified multi-dimensional knapsack problem which may be formulated by introducing a penalty vector in the multi-dimensional knapsack problem.

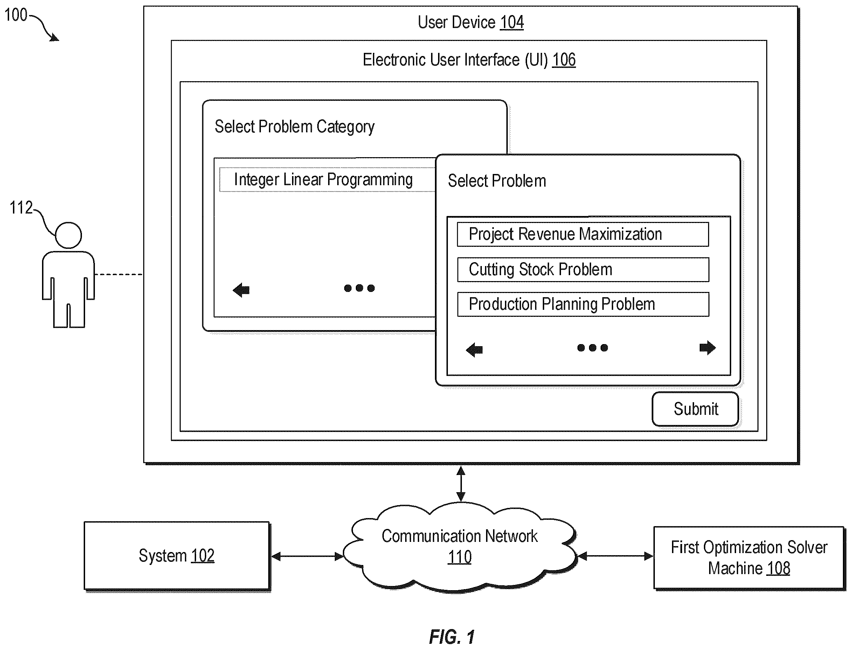

FIG. 1 is a diagram representing an exemplary network environment for solving integer linear programming problems on optimization solver machines, arranged in accordance with at least one embodiment described in the present disclosure. With reference to FIG. 1, there is shown a network environment 100. The network environment 100 includes a system 102, a user device 104, an electronic User Interface (UI) 106 of the user device 104, and a first optimization solver machine 108. The system 102, the user device 104, and the first optimization solver machine108 may be communicatively coupled to each other, via a communication network 110. There is further shown a user 112 who may be associated with the user device 104.

The system 102 may be a part of an on-premise computing environment associated with the user 112 or a cloud-based computing environment. The system 102 may include suitable logic, circuitry, and interfaces that may be configured to display a set of user-selectable options onto the electronic UI 106 of the user device 104. Each of such options may be used to configure an Integer Linear Programming (ILP) problem for a specific application area. The ILP problem may model a real-world optimization problem and may be mathematically formulated to include an objective function and a set of constraints on integer variables associated with the objective function.

In one or more embodiments, the system 102 may include the user device 104 as part of the on-premise computing environment. The user device 104 may include a suitable network interface to communicate with the first optimization solver machine 108 that may be on premise or may be hosted on a cloud system. Examples of the user device 104 may include, but are not limited to, a mobile device, a desktop computer, a laptop, a computer workstation, or a server, such as a cloud server.

The electronic UI 106 may be displayed on the user device 104 to allow the user 112 to select and configure an application-specific problem as an ILP problem. The application-specific problem may be selected from a list of problems related to application areas, such as, but not limited to, scheduling, resource allocation, finance, transportation, and vehicle routing. Examples of such problems may include, but are not limited to, a cutting stock problem, a project revenue maximization problem, or a production scheduling problem.

In an embodiment, the system 102 may receive an ILP problem, which may include an objective function and a set of constraints on integer variables of the objective function. The ILP problem may be received based on an input to select, from the displayed set of user-selectable options, a first user-selectable option associated with the ILP problem. When the option is selected, the electronic UI 106 may display a composition page where the user 112 may provide inputs and customize parameters and constraints of the selected ILP problem.

In one or more embodiments, the electronic UI 106 may include an edit window, through which the user 112 may customize the problem formulation by modifying the objective function and/or the set of constraints over the integer variables. Using the edit window, the user 112 may be able to input a revised objective function and/or a constraint of the ILP problem. In these or other embodiments, the electronic UI 106 may allow the user 112 to provide a set of datapoints as input for the ILP problem. For example, for a project return maximization problem, the electronic UI 106 may include options through which the user 112 may specify datapoints, such as a number of projects available for completion in a year, a budget for projects, a cost per project type, and different types of projects available. The system 102 may map such datapoints to input parameters associated with the ILP problem.

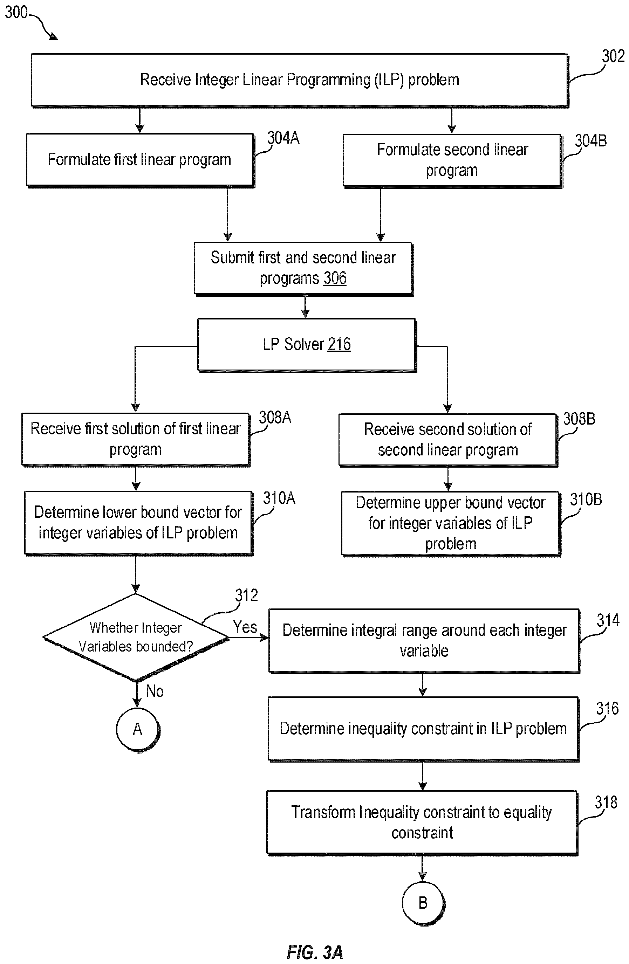

The system 102 may determine a lower bound vector and an upper bound vector for the integer variables of the ILP problem. The lower bound vector may be determined by solving a first linear program on a relaxed form of the integer variables and the upper bound vector may be determined by solving a second linear program on the relaxed form of the integer variables. The relaxed form of the integer variables may be obtained by replacing the integer variables with real-valued variables. Details about the first linear program and the second linear program are provided in FIG. 3A, for example.

In some embodiments, the system 102 may utilize conventional linear programming (LP) solvers, such as Cplex, MATLAB, Mathematica, NAG numerical library, or Gurobi to determine the lower bound vector and the upper bound vector. Thereafter, the system 102 may obtain a binary variable representation of each of the integer variables based on the determined lower bound vector and the determined upper bound vector. The received ILP problem may be updated based on the obtained binary variable representation. Such an update may include a substitution of each of the integer variables with the obtained binary representation for the respective integer variable. If the set of constraints of the received ILP problem includes an inequality constraint, then the system 102 may add a set of slack variables to the inequality constraint. Similar to the integer variables, each of the set of slack variables may be represented in terms of at least one binary variable to obtain the updated ILP problem.

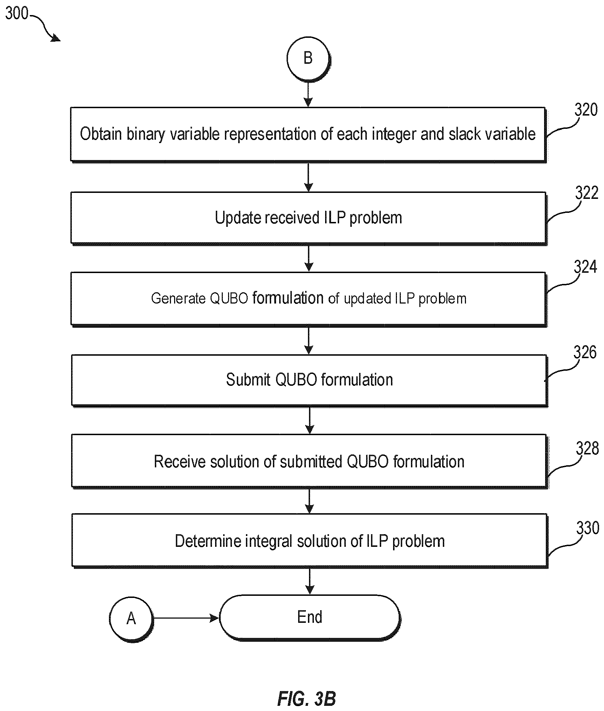

The system 102 may generate a Quadratic Unconstrained Binary Optimization (QUBO) formulation of the updated ILP problem. The QUBO formulation may be a compatible input format for the first optimization solver machine 108 and may include a square matrix (Q, a positive definite matrix) of constants. The value of the square matrix (Q) may be associated with a vector of binary variables (i.e. Boolean variables) and may depend on an updated objective function, and an updated set of constraints. In some embodiments, the QUBO formulation may be generated further based on penalty terms or slack variables if there one or more inequality constraints in the set of constraints of the received ILP problem. Such terms and variables may be considered while generating the QUBO formulation. The generation of the QUBO formulation is described in detail, for example, in FIGs. 3A and 3B.

The generated QUBO formulation may be submitted via one or more application programming interface (API) calls to the first optimization solver machine 108. These API calls may be used to deliver a request from the system 102 to the first optimization solver machine 108 and then relay a response to the request back from the first optimization solver machine 108 to the system 102. The first optimization solver machine 108 may receive the QUBO formulation and may compute a solution of the submitted QUBO formulation by using optimization solving methods, such as quantum annealing or simulated annealing.

In one or more embodiments, the first optimization solver machine 108 may be implemented as a generalized quantum computing device on a cloud-based optimization system. The cloud-based optimization system may be implemented as one of a private cloud, a public cloud, or a hybrid cloud. In such an implementation, the generalized quantum computing device may use specialized optimization solving software applications (e.g., a QUBO or an Ising solver) at an application layer to implement searching algorithms or meta-heuristic algorithms, such as simulated annealing or quantum annealing, to search for the solution of the QUBO formulation from a discrete solution space of Boolean values (0 or 1).

The generalized quantum computing device may be different from a digital bit-based computing device, such as digital devices that are based on transistor-based digital circuits. The generalized quantum computing device may include one or more quantum gates that use quantum bits (hereinafter referred to as "qubits") to perform computations for different information processing applications, such as quantum annealing computations for solving the QUBO formulation of the updated ILP problem. In general, a qubit can represent "0", "1", or a superposition of both "0" and "1". In most cases, the generalized quantum computing device may need a carefully controlled cryogenic environment to function properly. The generalized quantum computing device uses certain properties found in quantum mechanical systems, such as quantum fluctuations, quantum superposition of its Eigenstates, quantum tunneling, and quantum entanglement. These properties may help the generalized quantum computing device to perform computations for solving certain mathematical problems (e.g. QUBO) which are computationally intractable by conventional computing devices. Examples of the generalized quantum computing device may include, but are not limited to, a silicon-based nuclear spin quantum computer, a trapped ion quantum computer, a cavity quantum-electrodynamics (QED) computer, a quantum computer based on nuclear spins, a quantum computer based on electron spins in quantum dots, a superconducting quantum computer that uses superconducting loops and Josephson junctions, and nuclear magnetic resonance quantum computer.

In some other embodiments, the first optimization solver machine 108 may be a quantum annealing computer that may be specifically designed and hardware/software optimized to implement searching algorithms or meta-heuristic algorithms, such as simulated annealing or quantum annealing. Similar to the generalized quantum computing device, the quantum annealing computer may also use qubits and may require a carefully controlled cryogenic environment to function properly.

In some other embodiments, the first optimization solver machine 108 may correspond to a digital quantum-computing processor for solving user-end ILP problems, which may be submitted in the form of the QUBO formulation or an Ising formulation (e.g., after a conversion from QUBO to Ising). More specifically, the first optimization solver machine 108 may be a digital annealer that may be based on a semiconductor-based architecture. The digital annealer may be designed to model the functionality of the quantum annealing computer on a digital circuitry. The digital annealer may operate at room temperature and may not require cryogenic environment to function. Also, the digital annealer may have a specific form factor that may allow it to fit on a circuit board that may be small enough to slide into the rack of a computing device or a computing infrastructure, such as a data center. In an embodiment, the digital annealer may include, for example, Ising Processing Units, to solve the Ising formulation of the ILP problem. The Ising formulation may be obtained after conversion of the generated QUBO formulation. Methods to perform such a conversion are well known in the art and therefore, details of such methods are omitted from the disclosure for the sake of brevity.

In some other embodiments, the first optimization solver machine 108 may include a processor to execute software instructions associated with one or more searching algorithms and/or meta-heuristic algorithms, such as simulated annealing or quantum annealing. Examples of the implementation of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof.

The system 102 may receive the solution of the submitted QUBO formulation from the first optimization solver machine 108. Thereafter, the system 102 may determine an integral solution of the received ILP problem based on the received solution. The determination of the integral solution of the received ILP problem is described in detail, for example, in FIG. 3B.

In some embodiments, the system 102 may control the user device 104 to output the integral solution of the ILP problem. For example, the integral solution may be displayed on the electronic UI 106 of the user device 104 or may be committed as an update to a database on the user device 104.

It should be noted that the communication among the system 102, the user device 104, and the first optimization solver machine 108 may be performed via the communication network 110. The communication network 110 may include a communication medium through which the system 102 may communicate with the first optimization solver machine 108, and different servers (not shown). Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN).

Various devices in the network environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

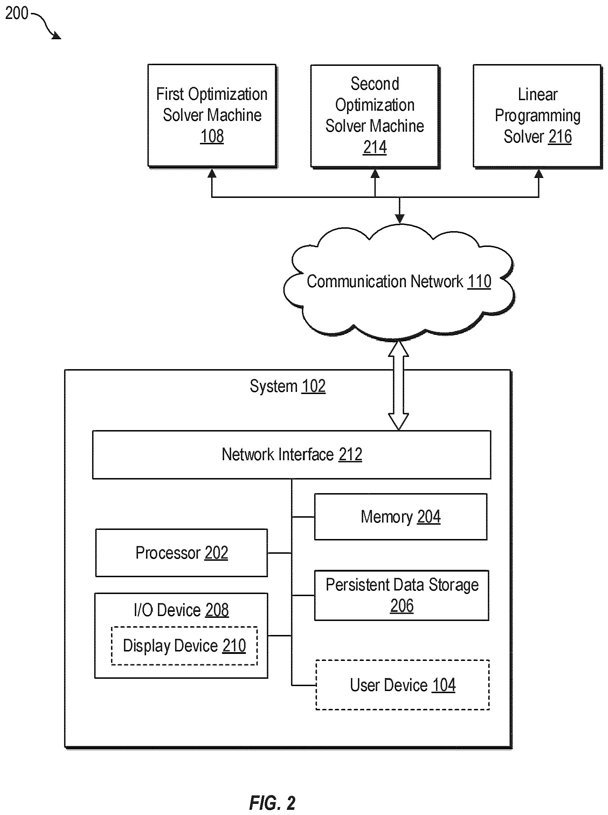

FIG. 2 is a block diagram of a system for solving integer linear programming problems on optimization solver machines, according to at least one embodiment of the disclosure. FIG. 2 is explained in conjunction with elements from FIG. 1. With reference to FIG. 2, there is shown a block diagram 200 of the system 102. The system 102 may include a processor 202, a memory 204, and a persistent data storage 206. In some embodiments, the system 102 may also include an input/output (I/O) device 208 that may include a display device 210, and a network interface 212. The user device 104 may or may not be a part of the system 102. With reference to FIG. 2, there is further shown a second optimization solver machine 214, and a linear programming (LP) solver 216.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure.

In some embodiments, the processor 202 may be configured to interpret and/or execute program instructions and/or process data stored in the memory 204 and/or the persistent data storage 206. In some embodiments, the processor 202 may fetch program instructions from the persistent data storage 206 and load the program instructions in the memory 204. After the program instructions are loaded into memory 204, the processor 202 may execute the program instructions. Some of the examples of the processor 202 may be a GPU, a CPU, a RISC processor, an ASIC processor, a CISC processor, a co-processor, and/or a combination thereof.

The memory 204 may include suitable logic, circuitry, and/or interfaces that may be configured to store program instructions executable by the processor 202. In certain embodiments, the memory 204 may be configured to store information, such as the objective function and a set of constraints associated with one or more ILP problem(s) (as described in FIG. 1, for example). The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The persistent data storage 206 may include suitable logic, circuitry, and/or interfaces that may be configured to store program instructions executable by the processor 202, operating systems, and/or application-specific information, such as logs and application-specific databases. The persistent data storage 206 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 208 may include suitable logic, circuitry, interfaces, and/or code that may be configured to receive the ILP problem. The I/O device 208 may be further configured to publish the integral solution of the ILP problem on the display device 210. The I/O device 208 may include various input and output devices, which may be configured to communicate with the processor 202 and other components, such as the network interface 212. Examples of the input devices may include, but are not limited to, a touch screen, a keyboard, a mouse, a joystick, and/or a microphone. Examples of the output devices may include, but are not limited to, a display (such as the display device 210) and a speaker.

The display device 210 may include suitable logic, circuitry, interfaces, and/or code that may be configured to render the electronic UI 106 onto a display screen of the display device 210. In one or more embodiments, multiple user inputs from a user (such as the user 112) may be received directly, via the display device 210. In such cases, the display screen of the display device 210 may be a touch screen to receive the multiple user inputs. The display device 210 may be realized through several known technologies such as, but not limited to, a Liquid Crystal Display (LCD) display, a Light Emitting Diode (LED) display, a plasma display, and/or an Organic LED (OLED) display technology, and/or other display technologies. Additionally, in some embodiments, the display device 210 may refer to a display screen of smart-glass device, a 3D display, a see-through display, a projection-based display, an electro-chromic display, and/or a transparent display.

The second optimization solver machine 214 machine may include the set of Ising processing units that may be configured to solve an Ising formulation(s). In one or more embodiments, each Ising processing unit may be a software module or hardware-based device (such as a digital annealer) that may be configured to run on the second optimization solver machine 214. Each Ising processing unit may correspond to a mathematical abstraction of an Ising model for solving the Ising formulation. The Ising model may be a mathematical model concerned with the physics of phase transitions, which occur when a small change in a parameter causes a large-scale, qualitative change in the state of a system. The properties of a magnetic material may be determined by magnetic spins, which can be oriented up (+1) or down (-1). The Ising model may be expressed in terms of the individual spin states (+1/-1), the interaction coefficients that represent the strength of the intersections between different pairs of spin states, and the external magnetic coefficients that represent the strength of the external magnetic field. Therefore, a solution of the Ising formulation may be analogous to spin states for a minimum energy configuration of the Ising model.

The set of Ising Processing Units may be configured to solve the Ising formulation by searching for values of binary decision variables (+1/-1) of the Ising formulation from a discrete solution space such that the energy (analogous to energy of the Ising Model) of the Ising formulation is a minimum.

The LP solver 216 may include suitable logic, circuitry, interfaces, and/or code that may be configured to solve linear optimization problems in a polynomial time. In some embodiments, the LP solver 216 may correspond to a software that may be installed on the system 102 or hosted on a cloud environment. In some other embodiments, the LP solver 216 may be a specialized hardware that may be configured solve the linear optimization problems. Several open source and proprietary LP solvers as well as libraries are known in the art. Examples of such LP solvers may include but is not limited to, CPLEX, GLPK/GLPSOL, Gurobi, Lp_solve, Mathematica, MINOS, (Mixed Integer Optimizer) MINTO, MOSEK, SCIP, SoPlex, or Xpress-Optimizer.

The network interface 212 may include suitable logic, circuitry, interfaces, and/or code that may be configured to establish a communication among the system 102, the user device 104, the first optimization solver machine 108, the second optimization solver machine 214, and the LP solver 216 via the communication network 110. The network interface 212 may be implemented by use of various known technologies to support wired or wireless communication of the system 102 via the communication network 110. The network interface 212 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 212 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

Modifications, additions, or omissions may be made to the system 102 without departing from the scope of the present disclosure. For example, in some embodiments, the system 102 may include any number of other components that may not be explicitly illustrated or described.

FIGs. 3A and 3B, collectively, depicts a block diagram that illustrates a set of operations for solving integer linear programming problems on optimization solver machines, in accordance with example embodiments. FIGs. 3A and 3B are explained in conjunction with elements from FIG. 1, and FIG. 2. With reference to FIGs. 3A and 3B, there is shown a set of exemplary operations 300. The exemplary operations illustrated in the block diagrams of FIGs. 3A and 3B may be performed by the system 102 of FIG. 1 or by the processor 202 of FIG. 2.

At 302, an ILP problem may be received. The system 102 may receive the ILP problem via the electronic UI 106. The ILP problem may include an objective function and a set of constraints on integer variables of the objective function. The objective function may be a minimization function or a maximization function on integer variables and may be subjected to linear constraints. Such constraints may include a linear equality and/or linear inequality constraint, for example. In an embodiment, the system 102 may also receive datapoints associated with an application-specific problem, which may be modelled as the ILP problem. Such datapoints may be mapped to parameters included in the objective function and/or the set of constraints of the ILP problem.

In an embodiment, the ILP problem may be selected from a set of application specific ILP problems displayed on the electronic UI 106 of the user device 104. In such a scenario, the system 102 may determine the objective function and the set of constraints based on the selection of the ILP problem via the electronic UI 106. By way of example, and not limitation, the objective function of a generalized ILP problem may be given by equation (1), as follows:

$$\min (c, x) \sum_{j=1}^{n} c_i x_i \qquad (1)$$

where,

c may represent a cost vector and $c \in R^n$, and
x may represent an unknown integer vector of variables and $x = \{x_1, x_2, x_3, ...., x_n\}$.

The objective function of equation (1) may be subjected to an inequality constraint (i.e. a constraint function), which may be given by equation (2), as follows:

$$Ax \le b$$
$$x \in Z^n \qquad (2)$$

where,

A may represent a constraint matrix and $A \in R^{m \times n}$, and
b may represent a constraint vector and $b \in R^m$.

The objective function of equation (1) may have to be minimized over the unknown integer vector of variables (x) to obtain an optimal or near-optimal solution of the ILP problem. In an embodiment, parameters, such as the cost vector (c), the constraint matrix (A), or the constraint vector (b) may be determined based on the received datapoints associated with the application-specific problem.

At 304A, a first linear program may be formulated. To formulate the first linear program, the system 102 may obtain a relaxed form of the integer variables by replacing the integer variables ($x, x \in Z^n$ ) with real-valued variables ($\tilde{x}, \tilde{x} \in R^n$). The system 102 may formulate the first linear program on the obtained form of the integer variables. The formulated first linear program may include a first objective to minimize each of the real-valued variables. The first objective may be subjected to at least one inequality constraint on the real-valued variables. By way of example, and not limitation, the objective of the first linear program may be mathematically given by equation (3), as follows:

$$\text{minimize } \tilde{x}_i \qquad (3)$$

where,
$\tilde{x}$ may represent an unknown real-valued vector of variables and $\tilde{x} = \{\tilde{x}_1 \tilde{x}_2, \tilde{x}_3, .... , \tilde{x}_n\}$.

The objective of equation (3) may be subjected to an inequality constraint (i.e. a constraint function), which may be given by equation (4), as follows:

$$A\tilde{x} \le b$$
$$\tilde{x} \in R^n \qquad (4)$$

where,

A may represent a constraint matrix and $A \in R^{m \times n}$, and
b may represent a constraint vector and $b \in R^m$.

At 304B, a second linear program may be formulated. To formulate the second linear program, the system 102 may obtain the relaxed form of the integer variables by replacing the integer variables ($x$, $x \in Z^n$) with real-valued variables ($\tilde{x}$, $\tilde{x} \in R^n$). Further, the system 102 may formulate the second linear program on the obtained form of the integer variables. The formulated second linear program may include a second objective to maximize each of the real-valued variables. The second objective may be subjected to at least one inequality constraint on the real-valued variables. By way of example, and not limitation, the objective of the second linear program may be mathematically given by equation (5), as follows:

$$\text{maximize } \tilde{x}_i \qquad\qquad (5)$$

where,
$\tilde{x}$ may represent an unknown real-valued vector of variables and $\tilde{x} = \{\tilde{x}_1 \tilde{x}_2, \tilde{x}_3, \dots , \tilde{x}_n\}$.

The objective of equation (5) may be subjected to an inequality constraint (i.e. a constraint function), which may be given by equation (6), as follows:

$$A\tilde{x} \le b$$
$$\tilde{x} \in R^n \qquad\qquad (6)$$

where,

A may represent a constraint matrix and $A \in R^{m \times n}$, and
b may represent a constraint vector and $b \in R^m$.

At 306, a linear program submission may be performed. The system 102 may be configured to submit the formulated first linear program to the LP solver 216. Similar to the first linear program, the system 102 may be configured to submit the formulated second linear program to the LP solver 216. The LP solver 216 may be a software or hardware-based optimization solver that may be configured to solve the first linear program and the second linear program within a polynomial time.

At 308A, a first solution may be received. The system 102 may be configured to receive the first solution of the first linear program from the LP solver 216. The first solution may include a vector of real values ($\alpha$, alpha) as a minimum of the unknown vector of variables ($x$) in the first linear program. The vector of real values may be an optimal or near-optimal solution of the first linear program (as represented by equations (3) and (4)).

At 308B, a second solution may be received. The system 102 may be configured to receive the second solution of the second linear program from the LP solver 216. The second solution may include a vector of real values ($\beta$, beta) as a maximum of the unknown vector of variables ($x$) in the second linear program. The vector of real values and may be an optimal or near-optimal solution of the second linear program (as represented by equations (5) and (6)).

At 310A, a lower bound vector may be determined for the integer variables of the received ILP problem. The system 102 may be configured to determine the lower bound vector for the integer variables based on the received first solution. For example, the lower bound vector ($\lfloor \alpha \rfloor$) may be obtained by applying a floor function ($\lfloor . \rfloor$) on the vector of real values ($\alpha$, alpha) in the received first solution. For each integer variable, $x_i$ in $x$, the lower bound vector ($\lfloor \alpha \rfloor$) may include a corresponding lower bound ($\lfloor \alpha i \rfloor$).

At 310B, an upper bound vector may be determined for the integer variables of the received ILP problem. The system 102 may be configured to determine an upper bound vector for the integer variables based on the received second solution. For example, the upper bound vector ($\lceil \beta \rceil$) may be obtained by applying a ceiling function ($\lceil . \rceil$) on the vector of real values ($\beta$, beta) in the received second solution. For each integer variable, $x_i$ in $x$, the upper bound vector ($\lceil \beta \rceil$) may include a corresponding upper bound ($\lceil \beta_i \rceil$).

At 312, it may be determined whether the integer variables are bounded. The system 102 may determine an integer variable as unbounded based on a determination that a corresponding lower bound in the determined lower bound vector and/or a corresponding upper bound in the determined upper bound vector is infinite. In case one or more of the integer variables are determined as unbounded, control may pass to end. Otherwise, control may pass to 314.

At 314, an integral range determination may be performed. The system 102 may be configured to determine an integral range around each of the integer variables ($x$) in the objective function of the received ILP problem. For each integer variable $x_i$, the integral range may be determined based on a corresponding lower bound $\lfloor \alpha_i \rfloor$ of the determined lower bound vector ($\lfloor \alpha \rfloor$) and a corresponding upper bound to $\lceil \beta_i \rceil$ of the determined upper bound vector $\lceil \beta \rceil$. More specifically, the integer variable $x_i$ may take any possible integer value between an integral range spanning from $\lfloor \alpha_i \rfloor$ to $\lceil \beta_i \rceil$.

At 316, an inequality constraint determination may be performed. The system 102 may be configured to determine an inequality constraint from the set of constraints of the received ILP problem. For example, the constraint function of equation (2) may be an inequality constraint of the received ILP problem.

At 318, an inequality constraint transformation may be performed. The system 102 may be configured to transform the determined inequality constraint into an equality constraint. The transformation may include adding a set of slack variables to the inequality constraint. By way of example, and not limitation, the inequality constraint of equation (2) may be transformed into the equality constraint, which may be given by equation (7), as follows:
For all i,

$$\text{For all } i,$$

$$\sum_{j=1}^{n} a_{ij}x_j + s_i = b\_i \tag{7}$$

where

$s_i$ may represent an ith slack variable, and
$a_i$ may represent the ith row of the constraint matrix (A).

At 320, a binary variable representation of each integer and slack variable may be obtained. The system 102 may be configured to represent each of the integer variables using at least one binary variable. The system 102 may be configured to obtain the binary variable representation of each of the integer variables by solving a substitution term using the determined integral range (at 314) around a corresponding integer variable. By way of example, and not limitation, the substitution term for an $i^{th}$ integer variable ($x_i$) of the unknown integer vector (x) of equations (1) and (2) may be given by equation (8), as follows:

$$x_i = \lfloor \alpha_i \rfloor + \sum_{j=0}^{\lceil \log(\lceil \beta_i \rceil - \lfloor \alpha_i \rfloor) \rceil} y_{ij}2^j \tag{8}$$

where $y_{ij}$ may be binary variables required to represent the integer variable ($x_i$).

For example, if $\alpha_i = 2.3$ and $\beta_i = 4.1$, then $x_1$ may be represented as $x_1 = \lfloor 2.3 \rfloor + \sum_{j=0}^{\lceil \log(\lceil 4.1 \rceil - \lfloor 2.3 \rfloor) \rceil} y_{1j}2^j$, i.e., $x_1 = 2 + \sum_{j=0}^{1} y_{1j}2^j \text{ or } 2 + y_{10} + 2y_{11}$.

In an embodiment, the system 102 may be configured to represent each of the set of slack variables in terms of binary variables. To represent the each of the set of slack variables in terms of binary variables, the system 102 may be configured to determine a lower bound and an upper bound for each of the set of slack variables. The lower bound on the slack variable may be determined based on the determined inequality constraint. For example, with respect to the inequality constraint of equation (2), the slack variable (s) may be set to be non-negative as $Ax \leq b$. In other words, the lower bound on the slack variables may be set as 0 (i.e. a non-negative value).

The upper bound on the slack variable may be determined based on the determined lower bound and the determined upper bound around a corresponding integer variable. By way of example, and not limitation, the substitution term for an $i^{th}$ slack variable ($s_i$) may be given by equation (9), as follows:

$$s_i \leq b_i - \sum_{j \in [n]:a_{ij}<0} a_{ij}\lceil \beta_j \rceil - \sum_{j \in [n]:a_{ij}>0} a_{ij}\lceil \alpha_j \rceil \tag{9}$$

where,

$a_i$ may represent the ith row of the constraint matrix (A),
$\alpha_j$ may represent the lower bound around the integer variable ($x_j$), and
$\beta_j$ may represent the upper bound around the integer variable ($x_j$)

The system 102 may further determine a range around each slack variable based on a corresponding lower bound and a corresponding upper bound of the slack variable. After determining the range, the system 102 may represent each of the set of slack variables in terms of at least one binary variable, as described in case of the integer variables.

At 322, the received ILP problem may be updated. For such an update, the system 102 may be configured to substitute each of the integer variables with the obtained binary representation for the corresponding integer variable. Thereafter, the system 102 may reformulate the objective function and the set of constraints in terms of a vector of binary variables (y), based on the substitution. Such reformulation may be performed based on the substitution of each integer variable ($x_i$) with the corresponding substitution term (as provided in equation (8), for example).

In some embodiments, the system 102 may be further configured to update the reformulated objective function and the set of constraints to include each of the set of slack variables in terms of binary variables. After the update, each of the integer variables (x) and each of the set of slack variables (s) may be represented in in terms of binary variables in the updated ILP problem.

At 324, a QUBO formulation generation may be performed. The system 102 may be configured to generate a QUBO formulation of the updated ILP problem. The QUBO formulation may be a compatible input format for the first optimization solver machine 108 and may include a cost matrix (Q) of constants associated with the vector of binary variables (y). For example, equation (10) provides a generalized objective function in a QUBO form.

$$\min \ (z = y^T \cdot Q \cdot y) \qquad\qquad (10)$$

where,

y may represent the vector of Boolean/binary variables, and
Q may represent a cost matrix of constants.

At 326, a QUBO submission operation may be performed. The system 102 may be configured to submit the generated QUBO formulation (e.g., Q) to the first optimization solver machine 108. For example, such a submission may be performed via an API call to the first optimization solver machine 108.

In an embodiment, the first optimization solver machine 108 may solve the QUBO formulation by application of searching methods and/or meta-heuristic methods, such as quantum annealing, to obtain a solution of the submitted QUBO formulation. Specifically, to search for the solution (i.e. values of the vector of binary variables (y)), the energy of the QUBO formulation may be minimized. The solution may be optimal (or near optimal) and may be searched from a discrete solution space. In another embodiment, the QUBO formulation may be converted to an Ising formulation. In such a case, the Ising formulation may be submitted via the API call to the second optimization solver machine 214.

At 328, a solution of the submitted QUBO formulation may be received. The system 102 may receive the solution of the submitted QUBO formulation from the first optimization solver machine 108. In case of Ising formulation, a solution of the submitted Ising formulation may be received from the second optimization solver machine 214. The received solution may include a vector of binary values corresponding to the vector of binary variables (y). In case of the QUBO formulation, each binary variable (yi) may be assigned a binary value of 0 or 1. Whereas, in case of the Ising formulation, each binary variable (yi) may be assigned a binary value of +1 or -1 (representing one of the spin states of an Ising system).

At 330, an integral solution may be determined. The system 102 may be configured to determine an integral solution of the received ILP problem based on the received solution of the submitted QUBO formulation or the submitted Ising formulation. The integral solution may be considered as an optimal or near optimal solution of the received ILP problem. In an embodiment, the integral solution may be determined by solving the substitution term (as mentioned in equation (8)) for each integer variable ($x_i$) of the unknown integer vector (x) using the vector of binary values (included in received solution of the submitted QUBO formulation). For example, if $\alpha_i = 2.3$ and $\beta_i = 4.1$, then $x_i$ may be represented as $x_i = \lfloor 2.3 \rfloor + \sum_{j=0}^{\lceil \log(\lceil 4.1 \rceil - \lfloor 2.3 \rfloor) \rceil} y_{ij} 2^j$, i.e., $x_i = 2 + \sum_{j=0}^{1} y_{ij} 2^j$ or $2 + y_{i0} + 2y_{i1}$. In order to obtain the integer value of $x_i$, $y_{i0} = 0$ and $y_{i1} = 1$ may be substituted in $2 + y_{i0} + 2y_{i1}$ to obtain the integer value of $x_i$ as (2 + 0 + 2), i.e. 4. In one or more embodiments, the system 102 may output the determined integral solution of the received ILP problem on the electronic UI 106 of the user device 104. Thereafter, control may pass to end.

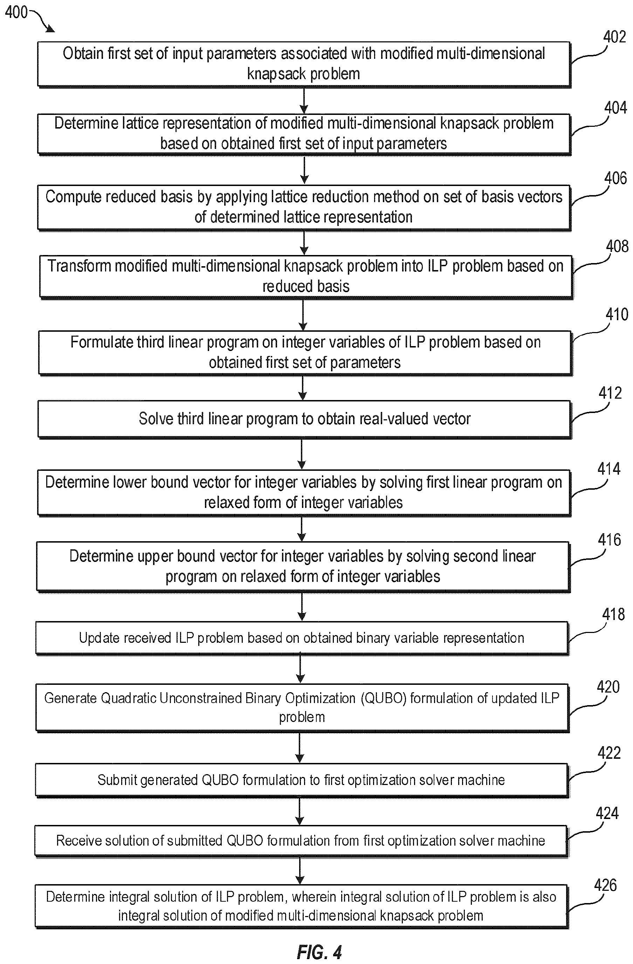

FIG. 4 is a flowchart of an example method for solving a modified multi-dimensional knapsack problem on optimization solver machines, arranged in accordance with at least one embodiment described in the present disclosure. FIG. 4 is explained in conjunction with elements from FIG. 1, FIG. 2, FIG. 3A, and FIG. 3B. With reference to FIG. 4, there is shown a flowchart 400. The example method illustrated in the flowchart 400 may start at 402 and may be performed by any suitable system, apparatus, or device, such as by the system 102 of FIG. 2.

At 402, a first set of input parameters associated with a modified multi-dimensional knapsack problem may be obtained. The modified multi-dimensional knapsack problem may be based on a multi-dimensional knapsack problem. The multi-dimensional knapsack problem is a well-known combinatorial optimization problem that aims to select a subset of items that maximizes a total profit while not exceeding resource capacity. By way of example, and not limitation, the objective function of the multi-dimensional knapsack problem is given by equation (11), as follows:

$$\text{maximize: } \sum_{j=1}^{n} v_j x_j \qquad (11)$$

Where,

$v_j$ represents a value of item 'j',
n represents a total number of items, and
$x_j$ represents a number of copies of item 'j'.

The objective function of equation (11) may be subjected to an inequality constraint (i.e. a constraint function), which may be given by equation (12), as follows:

$$\sum_{j=1}^{n} w_{ij} x_j \le b_i, \, \forall \, 1 \le i \le m \qquad (12)$$

$$x_j \in N^n, \, \forall \, 1 \le j \le n$$

where,

m represents number of resources with weight $b_i > 0$
$w_{ij}$ represents a weight of item 'j' from each resource 'i', and
bi represents a maximum capacity of a knapsack in 'i' dimension.

The modified multi-dimensional knapsack problem may be characterized by introduction of a penalty vector in the objective function, as provided by equation (11), of the multi-dimensional knapsack problem. Many real-world problems such as, but not limited to, a cutting stock problem or a project return maximization problem may be formulated as the modified multi-dimensional knapsack problem. By way of example, and not limitation, the objective function of the modified multi-dimensional knapsack problem may be given by equation (13), as follows:

$$\text{minimize}(x): c^T x - \lambda^T (b - Ax) \qquad (13)$$

where,

c represents a cost vector and $c \in R_+^n$,

b may be a vector that represents a set target and $b \in N_+^m$,

A may be a constraint matrix and represents resources required to fulfil an unknown integral quantity (x) of each offering type of a set of offering types and $A \in N_+^{mXn}$, and λ represents the penalty vector and $\lambda \in R_+^m$.

The objective function of equation (13) may be subjected to a constraint function, which is given by equation (14), as follows:

$$Ax \le b \qquad\qquad (14)$$

The first set of input parameters may include a first parameter that may represent a cost vector. The cost vector may include the cost of each offering type of the set of offering types. The first set of input parameters may further include a second parameter that may represent resources required to fulfil the unknown integral quantity (x) of each offering type of the set of offering types. The first set of input parameters may further include a third parameter that may represent the set target applicable on the fulfilment of the objective of the modified multi-dimensional knapsack problem, and a fourth parameter that may represent the penalty vector.

In some other embodiments, the system 102 may receive a second set of input parameters associated with the multi-dimensional knapsack problem as an input. In such a scenario, the received second set of input parameters may be transformed to the first set of input parameters. The system 102 may obtain the first set of input parameters based on the transformation.

At 404, a lattice representation of the modified multi-dimensional knapsack problem may be determined. The lattice representation may be determined based on the obtained first set of input parameters. The determined lattice representation may include a set of basis vectors. By way of example, and not limitation, the lattice representation of the modified multi-dimensional knapsack problem may be provided by equation (15), as follows:

$$\begin{bmatrix} -\text{Diag}(\lambda)A & \text{Diag}(\lambda)b \\ \text{Diag}(c) & 0^{nX1} \end{bmatrix} \qquad\qquad (15)$$

where,

$\text{Diag}(\lambda)$ represents a square matrix with diagonal entries from $\lambda$ (i.e. the penalty vector) and rest of the entries as 0, and
$\text{Diag}(c)$ represents a square matrix with diagonal entries from c (i.e. the cost vector) and rest of the entries as 0.

At 406, a reduced basis may be computed. The reduced basis may be computed by applying a lattice reduction method on the set of basis vectors of the determined lattice representation. Examples of the lattice reduction method may include, but are not limited to, Lenstra-Lenstra-Lovász (LLL) lattice basis reduction algorithm, Block Korkine Zolotarev (BKZ) algorithm, or Seysen reduction algorithm.

At 408, the modified multi-dimensional knapsack problem may be transformed into the ILP problem. Such transformation may be based on the reduced basis. The ILP problem may include the objective function and a real-valued constraint on the integer variables of the objective function. By way of example, and not limitation, the objective function of the ILP problem may be provided by equation (16), as follows:

$$\min\left(1^{(m+n)}B\right)y \qquad\qquad (16)$$

Where,

B represents the computed reduced basis, and
y represents a first variable whose value is to be found and $y \in Z^{(n+1)\times 1}$.

The objective function of equation (16) may be subjected to one or more constraint functions, which may be given by equation (17), as follows:

$$(By)^T \in R_+^{(m+n)} \backslash 0^{(m+n)} \qquad\qquad (17)$$

At 410, a linear program (such as a third linear program) on the integer variables of the modified multi-dimensional knapsack problem may be formulated. Such formulation may be based on the obtained first set of parameters. The formulated third linear program may be subjected to an inequality constraint on the integer variables. By way of example, and not limitation, the third linear program may be provided by equation (18), as follows:

$$u_i = \lambda_i b_i, \text{ for } i \in [1,m]$$

$$\tag{18}$$

$$u_i = \max c_i x_i, \text{ for } i \in [m+1, m+n]$$

where,

m and n may represent co-ordinates of 'By' (where $\text{'By'} \in R_+^{(m+n) \times 1}$ ),

m coordinates of $\text{'By'} \in R_+^{(m+n) \times 1}$ may correspond to penalty amounts corresponding to m orders, and

n coordinates of $\text{'By'} \in R_+^{(m+n) \times 1}$ may correspond to costs of n orders.

The third linear program of equation (18) may be subjected to an inequality constraint on the integer variables of the ILP problem, which may be given by equation (19), as follows:

$$Ax \leq b$$

$$\tag{19}$$

$$x \in R_+^{nX1}$$

At 412, the third linear program may be solved to obtain a real-valued vector (u). For example, the LP solver 216 may solve the third linear program (of equation (18)). The obtained real-valued vector (u) may be used to determine inequality constraints of the first linear program and the second linear program (as described in FIGs. 3A and 3B) for determining the upper bound vector and the lower bound vector, respectively, for the integer variables of the ILP problem. Herein the ILP problem may be obtained at 410 based on the modified multi-dimensional knapsack problem.

At 414, the lower bound vector for the integer variables of the ILP problem may be determined. The lower bound vector may be determined by solving the first linear program on the relaxed form of the integer variables. The first linear program may include an inequality constraint that may be determined based on the obtained real-valued vector (u). By way of example, and not limitation, the inequality constraint may be provided by equation (20), as follows:

$$By \leq u \tag{20}$$

where,

u represents the obtained real-valued vector.

Details about the determination of the lower bound vector are provided in FIG. 3A, for example.

At 416, the upper bound vector for the integer variables of the ILP problem may be determined. The upper bound vector may be determined by solving the second linear program on the relaxed form of the integer variables. The second linear program may include an inequality constraint (as provided in equation (20)) that may be determined based on the obtained real-valued vector (u). Details about the determination of the upper bound vector are provided in FIG. 3A, for example.

At 418, the modified multi-dimensional knapsack problem may be updated. Such an update may be based on the determined lower bound vector and the determined upper bound vector for the integer variables of the ILP problem. Details about the update of the modified multi-dimensional knapsack problem are provided in FIG. 3B, for example.

At 420, the QUBO formulation of the updated ILP problem may be generated. Details associated with the generation of the QUBO formulation are provided, for example, in FIG. 3A and FIG. 3B.

At 422, the generated QUBO formulation may be submitted to the first optimization solver machine 108 via an API call. Details associated with the submission of the QUBO formulation are described in detail, for example, in FIG. 3B.

At 424, the solution of the submitted QUBO formulation may be received from the first optimization solver machine 108. The received solution may include binary values of the vector of binary variables associated with the QUBO formulation.

At 426, the integral solution of the ILP problem may be determined and published on the user device 104 based on the received solution. The integral solution of the ILP problem may be considered as an integral solution of the modified multi-dimensional knapsack problem. The penalty vector ($\lambda$) of the modified multi-dimensional knapsack problem may regularize the objective function of the modified multi-dimensional knapsack problem based on whether the integral solution violates the set target represented by the third parameter of the obtained first set of parameters.

Although the flowchart 400 is illustrated as discrete operations, such as 402, 404, 406, 408, 410, 412, 414, 416, 418, 520, 522, 524, and 526; however, in certain embodiments, such discrete operations may be further divided into additional operations, combined into fewer operations, or eliminated, depending on the particular implementation.

It should be noted that the method described in the FIG. 4 may be applicable on other optimization problems. By way of example, and not limitation, the received ILP problem may be an optimization problem having the objective function for maximization of a revenue generated by a number of projects subject to budget constraints per year and a project cost. By way of example, and not limitation, the objective function of the optimization problem may be given by equation (21), as follows:

$$\text{maximize: } \sum_{p \in P} \sum_{y \in Y} (v_{py} - c_{py}) x_{py} \qquad (21)$$

where,

$v_{py}$ represents a revenue generated by a project 'p' in a year 'y',
$c_{py}$ represents a cost incurred by the project 'p' in the year 'y',
P represents a set of projects, and
Y represents a set of years in which the set of projects 'P' will span.

The objective function of equation (21) may be subjected to the budget constraints, which may be given by equation (22), as follows:

$$\sum_{p \in P} \sum_{t \leq y} c_{py} x_{py} \leq b_y, \ \forall \ y \in Y$$

$$\sum_{y=1}^{t} x_{py} \leq 1, \forall \ p \in P \qquad (22)$$

$$x_{py} \in N, \forall \ p \in P, y \in Y$$

where,
$b_y$ represents a budget of the year 'y'.

The optimization problem, as described using equation (21) and equation (22), is an ILP problem. In some embodiments the optimization problem may be solved using methods described in FIG. 3A and FIG. 3B. After solving, the integral solution of the optimization problem may specify the number of projects to be completed per year to maximize the revenue.

By way of another example, and not limitation, the received ILP problem may be a cutting stock problem. The cutting stock problem may have an objective function for minimization of a total cost associated with using multiple combinations of cuts for cutting pieces out of a stock for fulfilling orders, given a cost of each of the multiple combinations of cuts. The objective function of the cutting stock problem may be given by equation (23), as follows:

$$\text{minimize: } \sum_{i=1}^{n} c_i x_i \qquad (23)$$

where,

$c_i$ represents a cost associated with each pattern 'i', and
$x_i$ represents a number of copies of pattern 'i'.

The first objective function of equation (24) may be subjected to a constraint function, which maybe given by equation (24), as follows:

$$\sum_{j=1}^{n} a_{ij}x_i \geq q_j, \forall\ 1{\leq}j{\leq}m \tag{24}$$

$$x \in N, \forall\ 1{\leq} i{\leq} n$$

where,

a_{ij} represents a number of times order 'j' appears in pattern 'i', and
q_{j} represents a number of pieces required in order'j' and j = {1,2,3, ......., m}.

The cutting stock problem, as described using equation (23) and equation (24) may be first transformed into a multi-dimensional knapsack problem. In the transformation, parameters of the cutting stock problem may be transformed as parameters of the multi-dimensional knapsack problem. After the transformation, the multi-dimensional knapsack problem may be further transformed into a modified multi-dimensional knapsack problem. For such transformation, an additional penalty term (as represented by $\lambda^T$ (b-Ax) in equation (13)) may be introduced in the objective function of the multi-dimensional knapsack problem. Thereafter, operations from 402 to 426 may be performed to obtain the integral solution of the cutting stock problem. The integral solution of the cutting stock problem may specify the multiple combinations of cuts to be applied to minimize the total cost.

Although the present disclosure describes solving ILP on optimization solver machines, the present disclosure may also be applicable to an Ising formulation, which is a transformation of a QUBO formulation. Similar to the case of QUBO formulation, the Ising formulation submitted to the second optimization solver machine 214 and a solution of the Ising formulation may be received from the second optimization solver machine 214. The integral solution of the ILP problem may be determined based on the received solution of the ILP problem.

Various embodiments of the disclosure may provide a non-transitory computer-readable storage medium configured to store instructions that, in response to being executed, causes a system (such as the system 102) to perform operations that include receiving an Integer Linear Programming (ILP) problem including an objective function and a set of constraints on integer variables of the objective function. The operations may further include determining a lower bound vector for the integer variables by solving a first linear program on a relaxed form of the integer variables. The operations may further include determining an upper bound vector for the integer variables by solving a second linear program on the relaxed form of the integer variables. The operations may further include obtaining a binary variable representation of each of the integer variables based on the determined lower bound vector and the determined upper bound vector. The operations may further include updating the received ILP problem based on the obtained binary variable representation. The operations may further include generating a Quadratic Unconstrained Binary Optimization (QUBO) formulation of the updated ILP problem and submitting the generated QUBO formulation to a first optimization solver machine (such as the first optimization solver machine 108). The operations may further include receiving a solution of the submitted QUBO formulation from the first optimization solver machine and determining an integral solution of the received ILP problem based on the received solution.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

   receiving an Integer Linear Programming (ILP) problem comprising an objective function and a set of constraints on integer variables of the objective function;
   determining a lower bound vector for the integer variables by solving a first linear program on a relaxed form of the integer variables;
   determining an upper bound vector for the integer variables by solving a second linear program on the relaxed form of the integer variables;
   obtaining a binary variable representation of each of the integer variables based on the determined lower bound vector and the determined upper bound vector;
   updating the received ILP problem based on the obtained binary variable representation;
   generating a Quadratic Unconstrained Binary Optimization (QUBO) formulation of the updated ILP problem;
   submitting the generated QUBO formulation to a first optimization solver machine;
   receiving, from the first optimization solver machine, a solution of the submitted QUBO formulation; and
   determining an integral solution of the received ILP problem based on the received solution of the submitted QUBO formulation.

2. The method according to claim 1, further comprising:

   obtaining the relaxed form of the integer variables by replacing the integer variables with real-valued variables; and
   formulating the first linear program on the obtained form of the integer variables,
   the formulated first linear program comprising a first objective to minimize each of the real-valued variables, subject to at least one inequality constraint on the real-valued variables.

3. The method according to claim 2, wherein the solving the formulated first linear program comprises:

   submitting the formulated first linear program to a linear programming solver; and
   receiving a first solution of the submitted first linear program from the linear programming solver,
   wherein the lower bound vector is determined based on the received first solution of the submitted first linear program.

4. The method according to claim 1, further comprising:

obtaining the relaxed form of the integer variables by replacing the integer variables with real-valued variables; and

formulating the second linear program on the obtained form of the integer variables,

the formulated second linear program comprising a second objective to maximize each of the real-valued variables, subject to at least one inequality constraint on the real-valued variables.

5. The method according to claim 4, wherein the solving the formulated second linear program comprises:

submitting the formulated second linear program to a linear programming solver; and

receiving a second solution of the submitted second linear program from the linear programming solver, wherein the upper bound vector is determined based on the received second solution of the submitted second linear program.

6. The method according to claim 1, further comprising:

calculating an integral range around each of the integer variables, based on a corresponding lower bound of the determined lower bound vector and a corresponding upper bound of the determined upper bound vector; and

obtaining the binary variable representation of each of the integer variables by solving a substitution term using the determined integral range around a corresponding integer variable.

7. The method according to claim 1, wherein the updating comprises:

substituting each of the integer variables with the obtained binary representation for a corresponding integer variable of the integer variables; and

reformulating the objective function and the set of constraints in terms of a vector of binary variables based on the substitution.

8. The method according to claim 1, further comprising:

determining an inequality constraint from the set of constraints;

transforming the determined inequality constraint into an equality constraint by adding a set of slack variables to the inequality constraint;

representing each of the set of slack variables in terms of binary variables; and

updating the received ILP problem further based on the representation.

9. The method according to claim 1, further comprising obtaining a first set of input parameters associated with a modified multi-dimensional knapsack problem, wherein the first set of input parameters comprises:

a first parameter representing a cost vector comprising a cost of each offering type of a set of offering types,

a second parameter representing resources required to fulfil an unknown integral quantity of each offering type of the set of offering types,

a third parameter representing a set target applicable on the fulfilment of an objective of the modified multi-dimensional knapsack problem, and

a fourth parameter representing a penalty vector.

10. The method according to claim 9, wherein the penalty vector regularizes an objective function of the modified multi-dimensional knapsack problem based on whether the integral solution violates the set target represented by the third parameter.

11. The method according to claim 9, further comprising:

determining a lattice representation of the modified multi-dimensional knapsack problem based on the obtained first set of input parameters, wherein the determined lattice representation comprises a set of basis vectors;

computing a reduced basis by applying a lattice reduction method on the set of basis vectors of the determined lattice representation; and

transforming the modified multi-dimensional knapsack problem into the ILP problem based on the reduced basis, wherein the ILP problem comprises the objective function and a real-valued constraint on the integer variables of the objective function.

12. The method according to claim 11, further comprising:

formulating a third linear program on the integer variables of the ILP problem based on obtained first set of parameters, the formulated third linear program is subject to an inequality constraint on the integer variables; solving the third linear program to obtain a real-valued vector; determining the lower bound vector for the integer variables by solving the first linear program on the relaxed form of the integer variables; and determining the upper bound vector for the integer variables by solving the second linear program on the relaxed form of the integer variables, wherein

each of the first linear program and the second linear program comprises an inequality constraint which is determined based on the obtained real-valued vector, and the integral solution of the ILP problem is also an integral solution of the modified multi-dimensional knapsack problem.

13. The method according to claim 1, wherein

the received ILP problem is an optimization problem having the objective function for maximization of a revenue generated by a number of projects subject to budget constraints per year and a project cost, and the integral solution of the ILP problem specifies the number of projects to be completed per year to maximize the revenue.

14. The method according to claim 1, wherein

the received ILP problem is a cutting stock problem having the objective function for minimization of a total cost associated with using multiple combinations of cuts for cutting pieces out of a stock for fulfilling orders, given a cost of each of the multiple combinations of cuts, and the integral solution of the ILP problem specifies the multiple combinations of cuts to be applied to minimize the total cost.

15. The method according to claim 1, further comprising:

transforming the generated QUBO formulation into an Ising formulation; and submitting the Ising formulation to a second optimization solver machine.

16. The method according to claim 15, further comprising:

receiving, from the second optimization solver machine, a solution of the submitted Ising formulation; and determining the integral solution of the received ILP problem based on the received solution of the submitted Ising formulation.

17. A non-transitory computer-readable storage medium configured to store instructions that, in response to being executed, causes a system to perform operations, the operations comprising:

receiving an Integer Linear Programming (ILP) problem comprising an objective function and a set of constraints on integer variables of the objective function; determining a lower bound vector for the integer variables by solving a first linear program on a relaxed form of the integer variables; determining an upper bound vector for the integer variables by solving a second linear program on the relaxed form of the integer variables; obtaining a binary variable representation of each of the integer variables based on the determined lower bound vector and the determined upper bound; updating the received ILP problem based on the obtained binary variable representation; generating a Quadratic Unconstrained Binary Optimization (QUBO) formulation of the updated ILP problem; submitting the generated QUBO formulation to a first optimization solver machine; receiving, from the first optimization solver machine, a solution of the submitted QUBO formulation; and determining an integral solution of the received ILP problem based on the received solution of the submitted QUBO formulation.

18. The non-transitory computer-readable storage medium according to claim 17, wherein the operations further comprise obtaining a first set of input parameters associated with a modified multi-dimensional knapsack problem, wherein the first set of input parameters comprises:

a first parameter representing a cost vector comprising a cost of each offering type of a set of offering types,
a second parameter representing resources required to fulfil an unknown integral quantity of each offering type of the set of offering types,
a third parameter representing a set target applicable on the fulfilment of an objective of the modified multi-dimensional knapsack problem, and
a fourth parameter representing a penalty vector.

19. The non-transitory computer-readable storage medium according to claim 18, wherein the operations further comprise:

determining a lattice representation of the modified multi-dimensional knapsack problem based on the obtained first set of input parameters, wherein the determined lattice representation comprises a set of basis vectors;
computing a reduced basis by applying a lattice reduction method on the set of basis vectors of the determined lattice representation; and
transforming the modified multi-dimensional knapsack problem into the ILP problem based on the reduced basis, wherein the ILP problem comprises the objective function and a real-valued constraint on the integer variables of the objective function.

20. A system, comprising:

a processor configured to:

receive an Integer Linear Programming (ILP) problem comprising an objective function and a set of constraints on integer variables of the objective function;
determine a lower bound vector for the integer variables by solving a first linear program on a relaxed form of the integer variables;
determine an upper bound vector for the integer variables by solving a second linear program on the relaxed form of the integer variables;
obtain a binary variable representation of each of the integer variables based on the determined lower bound vector and the determined upper bound vector;
update the received ILP problem based on the obtained binary variable representation;
generate a Quadratic Unconstrained Binary Optimization (QUBO) formulation of the updated ILP problem;
submit the generated QUBO formulation to a first optimization solver machine;
receive, from the first optimization solver machine, a solution of the submitted QUBO formulation; and
determine an integral solution of the received ILP problem based on the received solution of the submitted QUBO formulation.

**FIG. 1**

100

112

User Device 104

Electronic User Interface (UI) 106

Select Problem Category

Integer Linear Programming

Select Problem

Project Revenue Maximization

Cutting Stock Problem

Production Planning Problem

Submit

System 102

Communication Network 110

First Optimization Solver Machine 108

EP 4 036 763 A1

200

First Optimization Solver Machine **108**

Second Optimization Solver Machine **214**

Linear Programming Solver **216**

Communication Network **110**

System **102**

Network Interface **212**

Processor **202**

Memory **204**

Persistent Data Storage **206**

I/O Device **208**

Display Device **210**

User Device **104**

*FIG. 2*

FIG. 3A

300

B

Obtain binary variable representation of each integer and slack variable — 320

Update received ILP problem — 322

Generate QUBO formulation of updated ILP problem — 324

Submit QUBO formulation — 326

Receive solution of submitted QUBO formulation — 328

Determine integral solution of ILP problem — 330

A → End

*FIG. 3B*

400

**402** Obtain first set of input parameters associated with modified multi-dimensional knapsack problem

**404** Determine lattice representation of modified multi-dimensional knapsack problem based on obtained first set of input parameters

**406** Compute reduced basis by applying lattice reduction method on set of basis vectors of determined lattice representation

**408** Transform modified multi-dimensional knapsack problem into ILP problem based on reduced basis

**410** Formulate third linear program on integer variables of ILP problem based on obtained first set of parameters

**412** Solve third linear program to obtain real-valued vector

**414** Determine lower bound vector for integer variables by solving first linear program on relaxed form of integer variables

**416** Determine upper bound vector for integer variables by solving second linear program on relaxed form of integer variables

**418** Update received ILP problem based on obtained binary variable representation

**420** Generate Quadratic Unconstrained Binary Optimization (QUBO) formulation of updated ILP problem

**422** Submit generated QUBO formulation to first optimization solver machine

**424** Receive solution of submitted QUBO formulation from first optimization solver machine

**426** Determine integral solution of ILP problem, wherein integral solution of ILP problem is also integral solution of modified multi-dimensional knapsack problem

*FIG. 4*

## EUROPEAN SEARCH REPORT

Europäisches
Patentamt
European
Patent Office
Office européen
des brevets

**Application Number**

EP 21 21 6384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AJAGEKAR AKSHAY ET AL: "Quantum computing based hybrid solution strategies for large-scale discrete-continuous optimization problems", COMPUTERS & CHEMICAL ENGINEERING, PERGAMON PRESS, OXFORD, GB, vol. 132, 31 October 2019 (2019-10-31), XP085915968, ISSN: 0098-1354, DOI: 10.1016/J.COMPCHEMENG.2019.106630 [retrieved on 2019-10-31] * section 6 * | 1-20 | INV. G06F17/11 G06N10/00 |
| X | HADDAR BOUKTHIR ET AL: "A hybrid heuristic for the 0-1 Knapsack Sharing Pro", EXPERT SYSTEMS WITH APPLICATIONS, ELSEVIER, AMSTERDAM, NL, vol. 42, no. 10, 7 February 2015 (2015-02-07), pages 4653-4666, XP029201547, ISSN: 0957-4174, DOI: 10.1016/J.ESWA.2015.01.049 * sections 4 and 5 * | 1-20 | |

**TECHNICAL FIELDS SEARCHED (IPC)**

G06F
G06N

The present search report has been drawn up for all claims

| Place of search | Date of completion of the search | Examiner |
|---|---|---|
| Berlin | 1 June 2022 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 036 763 A1**

**Patent documents cited in the description**

- US 24819821